Europäisches Patentamt

European Patent Office

Office européen des brevets

(19)

(11) Publication number: **0 147 277**
A2

(12) **EUROPEAN PATENT APPLICATION**

(21) Application number: **84402483.6**

(22) Date of filing: **04.12.84**

(51) Int. Cl.⁴: **B 01 D 53/04**
**C 07 C 9/04, C 07 C 7/12**

(30) Priority: **07.12.83 US 559153**

(43) Date of publication of application:
**03.07.85 Bulletin 85/27**

(84) Designated Contracting States:
**AT BE CH DE FR GB IT LI LU NL SE**

(71) Applicant: **CALGON CARBON CORPORATION**
**Route 60 Campbell's Run Road**
**Robinson Township Pennsylvania 15205(US)**

(72) Inventor: **Vo, Toan P.**
**1251 Fernridge Drive**
**Pittsburgh Pennsylvania 15241(US)**

(74) Representative: **Warcoin, Jacques et al,**
**Cabinet Régimbeau 26, avenue Kléber**
**F-75116 Paris(FR)**

(54) Process for separating a feed stream gas mixture using pressure swing adsorption.

(57) A molecular sieve, pressure swing adsorption process
employing two adsorbers for generating an enriched gas
from a feed stream gas mixture is claimed, wherein each
adsorber repeatedly passes through sequential steps com-
prising:

(a) high pressure adsorption;

(b) cocurrent partial depressurization by pressure equali-
zation;

(c) countercurrent venting to atmosphere;

(d) regeneration using a product gas purge;

(e) partial repressurization using product gas;

(f) cocurrent partial repressurization by pressure equali-
zation; and

(g) feed gas repressurization to the adsorption pressure.

C-1373

"PROCESS FOR SEPARATING A FEED
STREAM GAS MIXTURE USING PRESSURE
SWING ADSORPTION"

## Background of the Invention

This invention relates to a process for producing an enriched gas stream from a feed stream gas mixture by a pressure swing adsorption technique using a molecular sieve. Thus, a multi-component feed stream gas is separated via pressure swing adsorption, thereby producing a product gas enriched in one or more of the components comprising the feed gas mixture. This invention is beneficial in that it provides an inexpensive and high volume source of gases such as nitrogen, hydrogen or methane, which requires less energy to operate than either cryogenic or conventional pressure swing adsorption systems, and which supplies gases of comparable or improved quality. This discovery comprises a process wherein each of two adsorbent beds or adsorbers passes through a multi-step operating sequence which minimizes the quantity of adsorbent required to produce a unit volume of enriched product, thereby minimizing the capital costs of commercial systems, and which maximizes the quantity of product gas produced per unit volume of feed gas, thereby minimizing operating costs.

Pressure swing adsorption processes generally utilize adsorbent vessels (adsorbers) containing an adsorbent material such as a carbon molecular sieve to effectuate a desired separation. Typically, an adsorbent material is chosen which has a greater affinity for one of the constituents (i.e. the adsorbate) in a feed stream gas mixture than for the other constituents (i.e. the product gas or enriched gas). Thus, by passing a feed stream gas mixture through an adsorber containing a chosen adsorbent, a product gas is produced which contains less of the adsorbate than does the feed stream gas mixture.

With time, the amount of adsorbate on the adsorbent increases. At the time when the adsorbent no longer has capacity for the adsorbate, commonly called breakthrough, it is necessary to remove the adsorbate from the adsorbent by a regeneration technique. Thus, assuming that adsorption occurs at a pressure greater than atmospheric, three operating steps are required to again prepare the adsorbent bed for adsorption, including:

0147277

(1)   depressurization;

(2)   regeneration by desorbing the
      adsorbate from the adsorbent; and

(3)   repressurization.

Since it is often desirable to continuously produce an enriched gas, pressure swing adsorption processes usually include at least two adsorbers so that while one adsorber is being regenerated, the other(s) is (are) in the adsorption phase producing enriched product gas.  Thus, by cycling between the adsorbers, product gas can be delivered constantly.  A "pressure swing" is thus defined as a change in pressure associated with an adsorption/desorption cycle.  For example, many pressure swing adsorption systems utilize a pressure swing from some positive pressure (above atmospheric) to a lower pressure, for example atmospheric pressure or less than atmospheric pressure (vacuum).

The use of carbon molecular sieves for the separation of gases is known.  For example, carbon molecular sieves have been used in pressure swing adsorption processes to selectively remove oxygen from air.  These carbon sieves possess pore diameters comparable to the kinetic diameter of oxygen, and are generally made from coconut, wood, or various forms of coal.  See, for example, U.S. Patent Nos. 3,801,513; 3,962,129; 4,124,529; 3,923,477 and 4,256,469.

Other pressure swing adsorption systems for the separation of gas mixtures are also known in the art. See, for example, U.S. Patent Nos. 3,141,748; 3,104,162; 3,176,444; 3,430,418 and 3,884,661.

Pressure swing adsorption systems may be operated utilizing any of several different methods of adsorption, depressurization, repressurization and regeneration. By extensive experimentation, the inventor has discovered a process which offers significant advantages over conventional pressure swing adsorption systems. In this process, each of two adsorbers repeatedly passes through a multi-step operating sequence, the essence of which relates to simultaneous pressure equalization between the adsorbers whereby one adsorber is cocurrently partially depressurized while the other is cocurrently partially repressurizing. This multi-step process improves yields and purities over existing pressure swing adsorption processes while minimizing operating and capital costs. Further, the instant process utilizes vent gas of improved quality for equalization while providing a means for removing moisture and/or impurities from the adsorbers during pressure equalization.

This invention, which combines steps known individually into a unique, novel and unobvious process, is a substantial step forward in the art due to the synergism of the combined steps. Of the great multitude of operating combinations possible, the inventor has discovered one mode of operation which offers clear advantages over others known in the art. Typical problems in the present pressure swing adsorption and molecular sieve technology include: low product gas yield, low product gas purity, energy inefficient regeneration methods, the use of costly vacuum systems, high operating costs, high capital costs and large molecular sieve requirements. These problems are largely solved by the instant process.

## Brief Description of the Drawings

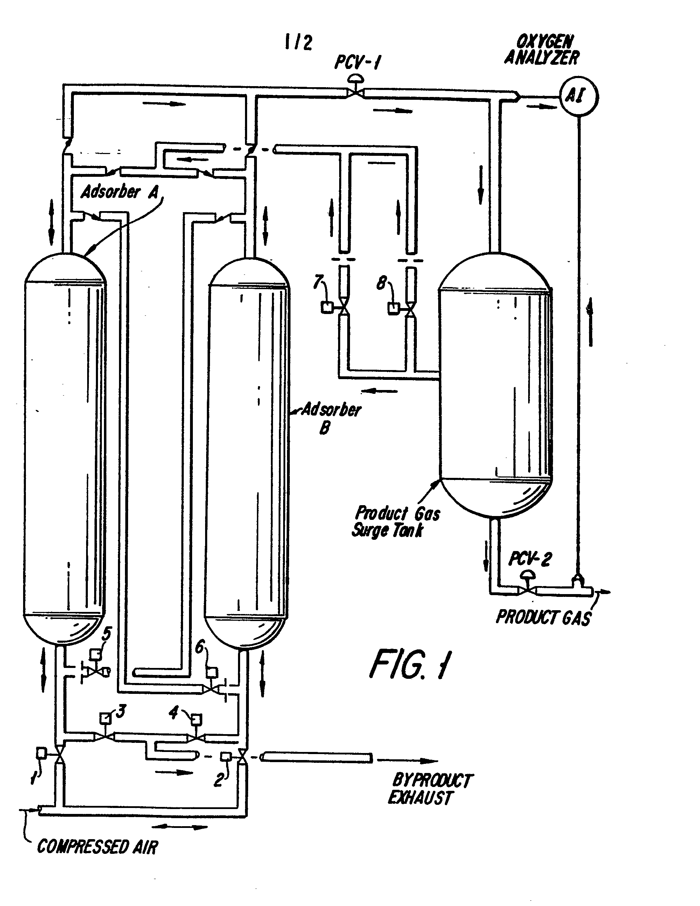

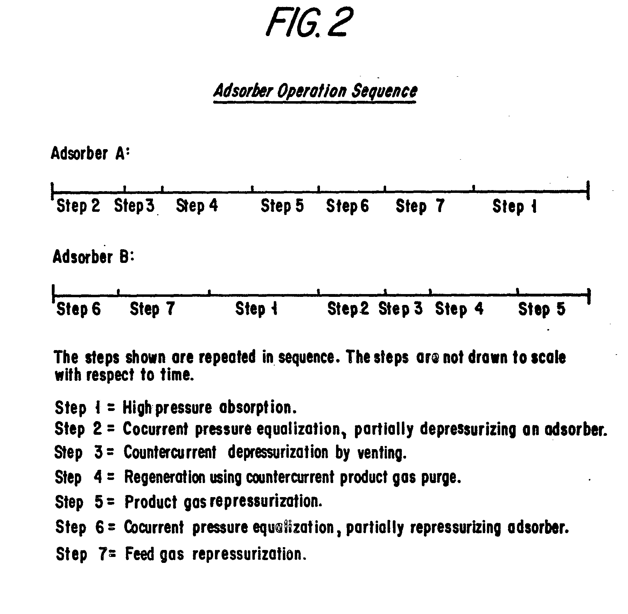

FIGURE 1 is a schematic representation of one apparatus upon which the novel pressure swing adsorption process described herein can be practiced. FIGURE 2 shows a typical operating sequence for adsorbers of the subject process and how the operating sequences of these adsorbers align.

## Detailed Description of the Invention

This invention relates to a molecular sieve, pressure swing adsorption process employing two adsorbers for generating enriched gas from a feed stream gas mixture, wherein a first of said two adsorbers repeatedly passes through sequential steps comprising:

(a) cocurrently passing said feed stream gas mixture through the first of said two adsorbers at an adsorption pressure greater than atmospheric pressure, thereby producing an enriched product gas;

(b) cocurrently partially depressurizing said first adsorber by venting it cocurrently to the second of said two adsorbers until the

C-1373
0147277

pressures of said first and second adsorbers are equalized, thereby simultaneously partially repressurizing said second adsorber;

(c) countercurrently depressurizing said first adsorber to atmosphere, thereby reducing the pressure of said first adsorber to atmospheric pressure;

(d) regenerating said first adsorber by purging said first adsorber with enriched product gas, thereby causing adsorbate in the pores of said molecular sieve adsorbent to be desorbed;

(e) partially repressurizing said first adsorber by adding enriched product gas to said first adsorber;

(f) cocurrently partially repressurizing said first adsorber by cocurrently venting said second adsorber to said first adsorber until the pressures of said first and second adsorbers are equalized, thereby simultaneously partially depressurizing said second adsorber; and

(g) repressurizing said first
adsorber to said adsorption
pressure using said feed stream
gas mixture;

and wherein said second of said two adsorbers repeatedly passes through Steps (a) through (g) above, treating the second adsorber as the first adsorber and vice versa, and wherein the operating sequences for said first adsorber and said second adsorber align so that Step (b) for said first adsorber occurs simultaneously with Step (f) for said second adsorber and Step (b) for said second adsorber occurs simultaneously with Step (f) for said first adsorber.

Two adsorbers are utilized in the instant process. Each adsorber is packed with a molecular sieve adsorbent, such as a carbon molecular sieve. Any carbon molecular sieve can be used in this process, including but not limited to the CMX-1, CMX-2 and CMX-3 sieves available from Calgon Carbon Corporation and the Bergbau Forschung GmBH carbon molecular sieves. Moreover, it is anticipated that with minor modifications as to cycle times and pressures, molecular sieves other than carbon molecular sieves will be useful in the process of the present invention. Thus, zeolites and other selective adsorbents recognized in the art may also be employed in the present invention.

Optionally, each adsorber may contain a short layer of a desiccant material at the inlet end followed by an extended layer of the chosen molecular sieve, thereby allowing the feed stream

gas mixture to be dried prior to enrichment. The length of the desicant bed in such a case depends on various process parameters, such as the moisture percent and flow rate of the feed stream gas mixture. Additionally, it is to be understood that modifications and variations may be made without departing from the spirit of the invention. For instance, instead of air being fractionated, any gas mixture containing two or more components separable by molecular size, shape or weight will suffice.

The term "feed stream gas mixture", as used herein, refers to the mixture of gas components to be separated such as air and other gas mixtures primarily comprised of two or more components of different molecular sizes, shapes or weights. Examples of feed stream gas mixtures include, but are not limited to mixtures comprising: methane and carbon dioxide; methane and air; hydrogen, carbon monoxide and carbon dioxide; hydrogen and hydrocarbon gases; and the like.

The terms "enriched gas" and "product gas" are synonymous and refer to that portion of the feed stream gas mixture which is primarily unadsorbed after passage of the feed stream gas mixture through the adsorbent. For example, enriched gas may be comprised of from 90 percent to 99 percent and higher of the unadsorbed component of a feed stream gas mixture. The term "vent gas", as used herein, refers to that gas released from an adsorbent column after the product fraction has been removed. Vent gas contains a higher concentration of adsorbate than does product gas. In fact, the concentration of adsorbate in vent gas may approach or exceed the concentration of adsorbate in the feed stream gas mixture. As described herein, gas normally flows in a cocurrent direction, i.e. into the column inlet and out of the column outlet. Gas flowing in the reverse direction, i.e. out of the column inlet, is said to flow in a countercurrent direction.

A gas mixture may be fractionated, or separated, using pressure swing adsorption by passing the mixture at an elevated pressure through an adsorbent which is selective in its capacity to adsorb one or more of the components of the mixture. This selectivity is governed by the pore size distribution in the adsorbent and the total pore volume. For example, gas molecules with a kinetic diameter of less than or equal to the pore size are retained, or adsorbed, on the adsorbent, while gas molecules of larger diameters are screened out and pass through the adsorbent bed. The adsorbent, in effect, sieves the gas according to the molecular size, weight or shape of its components.

Adsorption continues in an adsorber until the time when the concentration of adsorbate, for example oxygen, in the enriched gas reaches an undesirable level, for example 0.1 to 10 percent, by volume. Enriched gas produced by the instant method may flow directly to the application site from the adsorbers, but preferably flows to a product gas surge tank. Use of a product gas surge tank minimizes fluctuations in the product gas flow rate, pressure and purity, and facilitates the use of enriched gas for repressurization and/or regeneration of the adsorbent beds and is therefore

0147277

preferred.  If a product gas surge tank is not used, other means of product gas repressurization and regeneration must be used, such as repressurization and purging from a product gas conduit.

In the instant process, depressurization of an adsorber after adsorption occurs in two steps, including:

(i)   cocurrent partial depressurization by venting to the other adsorber until the pressures in the adsorbers equalize; and

(ii)  venting to atmosphere.

Repressurization of an adsorber after regeneration and prior to adsorption occurs in three steps:

(i)   partial repressurization using product gas, preferably from the product surge tank, to some pressure less than the equalization pressure;

(ii)  cocurrent partial repressurization by venting the other adsorber to the adsorber being repressurized until the pressures in the adsorbers equalize; and

(iii)   repressurization to the adsorption pressure using the feed stream gas mixture.

Step (i) of the depressurization sequence described immediately above and Step (ii) of the repressurization sequence described immediately above occur simultaneously.  Thus, the adsorbers are in direct communication during these segments of their operating cycles.  This simultaneous depressurization/repressurization step is one critical element of the invention.

Further, it is important that the simultaneous equalization steps be carried out so as to depressurize and repressurize cocurrently.  Thus, in a system where the adsorber inlets are at a lower elevation than the adsorber outlets, simultaneous cocurrent depressurization/cocurrent repressurization may be described as "tops-to-bottoms" equalization; each adsorber is partially depressurized through its outlet (cocurrently) at the top port and each adsorber is partially repressurized through its inlet (cocurrently) at the bottom port.  Simultaneous cocurrent depressurization and cocurrent repressurization is advantageous over, for example, simultaneous countercurrent depressurization and cocurrent repressurization, because product yields and purity are improved.  Steps (ii) and (iii) of the repressurization sequence described above can occur sequentially or simultaneously.  Thus, feed gas may be introduced into an adsorber being repressurized simultaneously with the flow of vent gas from the other adsorber or after the flow of vent gas begins without departing from the spirit of the invention.

While pressure swing adsorption processes can operate within a wide range of pressures, it is preferred to operate the instant process at an adsorption pressure in the range of 1.0 to 30.0 bars. The most preferred adsorption pressure range is from 4.0 to 9.0 bars.

The process disclosed herein can be better understood by reference to FIGURE 1, which shows a two-adsorber pressure swing adsorption system for separation of feed stream gas mixtures in accordance with this invention, and by FIGURE 2, which shows an operating sequence for these adsorbers. For purposes of illustration, assume that the feed stream gas mixture (feed gas) is air, the enriched gas is from 90 percent to 99.9 percent inert gas, by volume, the adsorbate is primarily oxygen, and the molecular sieve adsorbent is a carbon molecular sieve. The inert gas comprises nitrogen, argon and other noble gases.

FIGURE 1 shows two pressure-resistant adsorbers, "A" and "B", each of which contains an adsorbent such as a carbon molecular sieve.

The series of valves controlling the flow to and from pressure-resistant adsorbers "A" and "B" and the product gas surge tank may be defined by the numbers shown in FIGURE 1 and by the function performed in this one preferred arrangement:

--- valves 1 and 2: inlet feed stream gas valves to adsorbers A and B, respectively;

--- valves 3 and 4: vent valves for adsorbers A and B, respectively;

--- valves 5 and 6: pressure equalization valves between adsorbers A and B;

--- valve 7: product gas repressurization valve from product tank to adsorbers A and B;

--- valve 8: product gas purge valve from product tank to adsorbers A and B;

--- valve PCV-1 and PCV-2: back pressure control valve and pressure regulating valve, respectively;

--- check valves: control flow direction; shown as arrows in the adsorber connecting means; and

--- restriction orifices: restrict gas flow from the product tank; shown above valves 7 and 8.

While adsorbers A and B are shown in the vertical position, they may be installed in either the horizontal or vertical position without departing from the spirit of the invention.

Air is compressed and introduced into the system by either valve 1 or valve 2 at the adsorption pressure. The air may be pretreated prior to entering the adsorbers without departing from the spirit of the invention. For example, coolers, filters or scrubbers may be employed to cool and to remove entrained particles, or other gases such as carbon dioxide or oxides of nitrogen from the feed stream gas mixture. Pretreatment steps improve the purity of the feed gas and are employed when specifications for the product gas mandate such prior removal. They are, however, auxiliary and not requisite to successful operation of this invention.

Again referring to FIGURE 1, air is admitted to either adsorber A or adsorber B as a compressed gas via valves 1 or 2, respectively. For purposes of this example, assume that adsorber A is producing enriched gas. Upon entering adsorber A, the air may first pass through a short desiccant bed which removes excess humidity from the feed air, as a reduced relative humidity may be preferred. The feed air then passes directly into the volume of the adsorber which contains a carbon molecular sieve adsorbent. This adsorbent selectively removes oxygen from the feed air as it flows cocurrently through adsorber A. The preferred adsorption pressure is from 1.0 to 30.0 bars. Inert product gas is discharged from adsorber A through valve PCV-1, and is collected in the product gas surge tank. The product or enriched gas is generally at least 90 percent, by volume, inert, comprising nitrogen, argon and other noble gases. However, the process may be operated to produce enriched gas which is at least 95 percent, 97 percent, 99 percent or 99.9 percent inert, by volume. The oxygen concentration of the enriched gas stream may be analyzed upstream of the product gas surge tank as a measure of instantaneous product gas purity or downstream of the product gas surge tank as a measure of average product gas purity. A flow of product gas is discharged from the product gas surge tank at a constant pressure somewhat lower than the minimum pressure of the product gas surge tank via valve PCV-2.

At the conclusion of the adsorption portion of adsorber A's operating cycle, which occurs when the oxygen concentration reaches a designated level in the enriched nitrogen stream (for example 0.1 to 10 percent, by volume), the nearly spent adsorber A is partially vented through its outlet and valve 6, and the vented gas is passed to the bottom, or inlet, of adsorber B, assuming that the adsorber outlets are above the adsorber inlets as shown in FIGURE 1. This may then be aptly called "tops-to-bottoms" equalization.

Following this partial equalization step, the nearly spent carbon adsorber A is isolated and is totally depressurized to atmospheric pressure via vent valve 3, thereby partially desorbing and exhausting a quantity of byproduct gas which is high in oxygen concentration. The vented adsorber A is then countercurrently swept with 0.1 to 1.0 bed volumes of product gas at a controlled flow rate from the product tank via valve 7, thereby regenerating adsorber A by freeing adsorber A of additional residual and adsorbed oxygen via valve 3. After closing valve 3, adsorber A is partially repressurized with product gas from the product tank via valve 8 to from 0.1 to 50 percent of the adsorption pressure.

Final repressurization of the regenerated adsorber A is then accomplished by: pressure equalization, whereby vented gas from adsorber B enters adsorber A via valve 5, and by introduction of feed stream gas, via valve 1 to adsorber A. Thus, repressurization of adsorber A occurs in three steps. The final two steps can be carried out in sequence, or they can be carried out simultaneously. In either case, the partial venting of the nearly spent adsorber B into adsorber A allows for simultaneous partial depressurization of adsorber B and partial repressurization of adsorber A. As adsorber A reaches the adsorption pressure selected from the range of the 1.0 to 30.0 bars, pressure control valve PCV-1 opens, and the adsorption cycle begins as product gas is again introduced to the product gas surge tank from onstream adsorber A. The cycle operations described above are then repeated.

While either adsorber is on the adsorption portion of its operating cycle, the other adsorber is being regenerated. This, in conjunction with the use of a product gas surge tank, allows for nearly continuous production of product gas and for continuous delivery of product gas. FIGURE 2 shows how the operating cycles for adsorbers A and B align.

In summary, each adsorber is repeatedly cycled through the following steps: adsorption; cocurrent pressure equalization, whereby the adsorber is partially depressurized to the other adsorber; vent to atmosphere; purge gas regeneration; partial repressurization using product gas; cocurrent pressure equalization, whereby the adsorber is partially repressurized using vent gas from the other adsorber; and repressurization to the adsorption pressure using feed gas.

Systems which employ three, four or more adsorbers for the separation of feed stream gas mixtures utilizing the instant process are within the scope of this invention. In these systems, like in the two-adsorber case discussed above, each adsorber repeatedly passes through the following sequence of steps:

(a) cocurrent adsorption, thereby producing an enriched product gas;

(b) cocurrent partial depressurization by venting to another adsorber until the pressure of the other adsorber is equal to the pressure of the adsorber being depressurized;

(c) countercurrent vent to atmosphere, thereby reducing the pressure to atmospheric pressure;

(d) regeneration by purging with enriched product gas;

**0147277**

(e)  partial repressurization by addition of enriched gas;

(f)  cocurrent partial repressurization by venting from another adsorber until the pressure of the other adsorber is equal to the pressure of the adsorber being repressurized; and

(g)  repressurization to the adsorption pressure using the feed stream gas mixture.

Preferred cycle times for each step of the instant process are shown below for two-adsorber cases:

|  | Time (seconds) |
|---|---|
| (a) adsorption | 30-360 |
| (b) equalization, whereby adsorber A is partially depressurized to adsorber B | 1- 20 |
| (c) vent to atmosphere | 5- 75 |
| (d) regeneration | 25-360 |
| (e) partial product gas repressurization | 5- 35 |
| (f) equalization, whereby adsorber A is partially repressurized from adsorber B | 1- 20 |
| (g) feed gas repressurization | 25-100 |

The total cycle time for each of any two adsorbers utilized in the instant process and their

C
**0147277**

corresponding times for each step must be equal.
It is to be understood that the cycle time ranges
shown above are not process limitations. Cycle
times and step times outside of the ranges shown
are possible.

<div align="center">

Examples

</div>

The following examples illustrate the
advantages of "tops-to-bottoms" equalization over
"bottoms-to-bottoms" equalization. The pilot
system upon which the tests of Examples 1 through
10 were conducted consisted of two (2) 4-inch
diameter by 44-inch deep carbon steel adsorbers,
each containing 11.6 pounds of type CMS-II carbon
molecular sieve, available from Calgon Carbon
Corporation. Adsorption pressures ranged from 106
to 110 psig. Air was the feed stream gas mixture,
and it was dried using a refrigeration drier prior
to entering the adsorbers. Each adsorber
repeatedly passed through the following sequence of
steps: adsorption; pressure equalization, whereby
the adsorber was partially depressurized by venting
to the other adsorber until the pressures of the
adsorbers were equal; vent to atmosphere;
regeneration by product gas purge; partial
repressurization using product gas; pressure
equalization, whereby the adsorber was partially
repressurized by vent gas from the other adsorber;
and feed gas repressurization to the adsorption
pressure. The adsorber inlets were located below
the adsorber outlets. Thus, cocurrent
depressurization/cocurrent repressurization during
equalization was "tops-to-bottoms" equalization,
and countercurrent depressurization/cocurrent
repressurization during equalization was "bottoms-to-bottoms" equalization. Piping changes were made as necessary to facilitate either "tops-to-bottoms" equalization or "bottoms-to-bottoms" equalization. In all examples, the equalization steps occurred in 5 seconds, the vent to atmosphere step occurred in 25 seconds, and the product gas repressurization step occurred in 12 seconds. The times for the remaining steps varied from example to example, and are shown with the individual examples.

Minor differences in feed flow rates occurred throughout the experiments described in the examples. Due to the accuracy of the flow measuring device, which was $\pm5$ percent, and equipment limitations, it was difficult to duplicate feed flow rates exactly. However, these differences are not believed by the inventor to be critical to the comparisons between the "tops-to-bottoms" and "bottoms-to-bottoms" equalization modes shown in the examples.

An optimum pressure swing adsorption (PSA) process may be defined as one which has the lowest capital cost and the lowest operating cost, while delivering enriched gas of acceptable purity. The Effective Carbon Capacity (ECC) is equal to the amount of carbon in both adsorption columns divided by the product gas flow delivered by the system in standard cubic feet per hour. This parameter is directly related to the capital cost of a PSA system; i.e. the lower the EEC, the lower the capital cost. Yield is defined as the product gas flow from the product gas reservoir divided by the feed gas flow. Yield is inversely related to the compressor power requirement; i.e. the higher the yield, the lower the power requirement to produce a certain quantity of product gas. The cost of compression is a major component of the operating cost of this process. Purity is measured, in these examples, as the concentration of oxygen in the enriched gas (the lower the oxygen concentration, the higher the purity of enriched gas).

Examples 1 and 2:

Example 1 utilized bottoms-to-bottoms equalization. This example is directly comparable to Example 2, which utilized tops-to-bottoms equalization. In Examples 1 and 2, the times for each step of an adsorber operating cycle were as follows:

| Step | Time (Seconds) |
|------|----------------|
| Adsorption . . . . . . . . . . . . . . . . . . . | 60 |
| Equalization Depressurization . . . . . . . . | 5 |
| Vent . . . . . . . . . . . . . . . . . . . . | 25 |
| Regeneration . . . . . . . . . . . . . . . . . | 78 |
| Product Gas Repessurization . . . . . . . . . | 12 |
| Equalization Repressurization . . . . . . . . | 5 |
| Feed Gas Repressurization . . . . . . . . . . | 55 |
| Total: | 240 |

TABLE I

| Example | Equalization Mode | Feed Flow (SCFM) | Cycle Time (seconds) | Purity $(O_2)$% | Yield $\left(\dfrac{\text{Product SCFM}}{\text{Feed SCFM}}\right)$ | ECC $\left(\dfrac{\text{Lbs Sieve}}{\text{Product SCFH}}\right)$ |
|---------|-------------------|------------------|----------------------|----------------|------|------|
| 1 | Bottoms to Bottoms | 1.85 | 240 | 1.8 | 22.9 | 0.92 |
| 2 | Tops to Bottoms | 1.81 | 240 | 1.5 | 23.1 | 0.92 |

The results of Examples 1 and 2 show that tops-to-bottoms equalization improved purity 16.7 percent, while slightly improving yield.

Examples 3 and 4:

In these examples, the cycle times differed from those of Examples 1 and 2. Purity of the enriched gas was constant. The times for each step of an adsorber operating cycle were as follows:

| Step | Time (Seconds) |
|---|---|
| Adsorption | 40 |
| Equalization Depressurization | 5 |
| Vent | 25 |
| Regeneration | 33 |
| Product Gas Repessurization | 12 |
| Equalization Repressurization | 5 |
| Feed Gas Repressurization | 30 |
| Total: | 150 |

TABLE II

| Example | Equalization Mode | Feed Flow (SCFM) | Cycle Time (seconds) | Purity (O$_2$)% | Yield $\left(\dfrac{\text{Product SCFH}}{\text{Feed SCFM}}\right)$ | ECC $\left(\dfrac{\text{Lbs Sieve}}{\text{Product SCFH}}\right)$ |
|---|---|---|---|---|---|---|
| 3 | Bottoms to Bottoms | 2.17 | 150 | 0.86 | 12.9 | 1.38 |
| 4 | Tops to Tops | 1.99 | 150 | 0.86 | 16.9 | 1.14 |

The results of Examples 3 and 4 show that at constant purity, the use of tops-to-bottoms equalization improved yield 31 percent, while improving ECC 17.4 percent.

Examples 5 and 6:

Examples 5 and 6 compare bottoms-to-bottoms and tops-to-bottoms equalization at cycle times different from those of Examples 1 and 2 and 3 and 4. In these examples, the times for each step of an adsorber operating cycle were as follows:

|  Step | Time (Seconds) |
|-------|----------------|
| Adsorption | 40 |
| Equalization Depressurization | 5 |
| Vent | 25 |
| Regeneration | 43 |
| Product Gas Repessurization | 12 |
| Equalization Repressurization | 5 |
| Feed Gas Repressurization | 40 |
| Total: | 170 |

TABLE III

| Example | Equalization Mode | Feed Flow (SCFM) | Cycle Time (seconds) | Purity ($O_2$)% | Yield $\left(\dfrac{\text{Product SCFH}}{\text{Feed SCFM}}\right)$ | ECC $\left(\dfrac{\text{Lbs Sieve}}{\text{Product SCFH}}\right)$ |
|---------|-------------------|------------------|----------------------|-----------------|-------|-------|
| 5 | Bottoms to Bottoms | 1.95 | 170 | 1.0 | 15.4 | 1.26 |
| 6 | Tops to Bottoms | 1.84 | 170 | 0.76 | 15.0 | 1.29 |

The results of Examples 5 and 6 show that the use of tops-to-bottoms equalization resulted in comparable ECC and yield values, but that purity was tremendously improved (24 percent).

Examples 7 and 8:

Examples 7 and 8 compare bottoms-to-bottoms and tops-to-bottoms equalization using cycle times which differed from those of earlier examples. In these examples, the times for each step of an adsorber operating cycle were as follows:

| Step | Time (Seconds) |
|---|---|
| Adsorption | 40 |
| Equalization Depressurization | 5 |
| Vent | 25 |
| Regeneration | 28 |
| Product Gas Repressurization | 12 |
| Equalization Repressurization | 5 |
| Feed Gas Repressurization | 25 |
| Total: | 140 |

TABLE IV

| Example | Equalization Mode | Feed Flow (SCFH) | Cycle Time (seconds) | Purity (O₂)% | Yield (Product SCFH) / (Feed SCFH) | ECC (Lbs Sieve) / (Product SCFH) |
|---|---|---|---|---|---|---|
| 7 | Bottoms to Bottoms | 2.42 | 140 | 1.3 | 16.6 | .97 |
| 8 | Tops to Bottoms | 2.22 | 140 | 1.1 | 18.6 | .94 |

The results of Examples 7 and 8 clearly show the benefits of tops-to-bottoms equalization. Purity was improved 15.4 percent, yield was improved 12.0 percent, and ECC was improved 3.1 percent.

Examples 9 and 10:

Examples 9 and 10 compare bottoms-to-bottoms and tops-to-bottoms equalization. In these examples, the operating cycles of Examples 3 and 4 were used.

### TABLE V

| Example | Equalization Mode | Feed Flow (SCFH) | Cycle Time (seconds) | Purity (O$_2$)% | Yield $\left(\frac{Product\ SCFH}{Feed\ SCFH}\right)$ | ECC $\left(\frac{Lbs\ Sieve}{Product\ SCFH}\right)$ |
|---|---|---|---|---|---|---|
| 9 | Bottoms to Bottoms | 2.19 | 150 | 2.0 | 21.6 | .82 |
| 10 | Tops to Bottoms | 2.09 | 150 | 2.3 | 24.3 | .74 |

These results indicate that the tops-to-bottoms system improved yield 12.5 percent and ECC 9.8 percent, while decreasing purity 15 percent.

C-1377
**0147277**

WHAT IS CLAIMED IS:

1.   A molecular sieve, pressure swing adsorption process employing two adsorbers for generating enriched gas from a feed stream gas mixture, wherein a first of said two adsorbers repeatedly passes through sequential steps comprising:

(a)   cocurrently passing said feed stream gas mixture through said first of two adsorbers at an adsorption pressure greater than atmospheric pressure, thereby producing an enriched product gas;

(b)   cocurrently partially depressurizing said first adsorber by venting it to the second of said two adsorbers until the pressures of said first and second adsorbers are equalized, thereby simultaneously partially repressurizing said second adsorber;

(c)   countercurrently depressurizing said first adsorber to atmosphere, thereby reducing the pressure of said first adsorber to atmospheric pressure;

(d)   regenerating said first adsorber by purging said first adsorber with enriched product gas,
thereby causing adsorbate in the
pores of said molecular sieve
adsorber to be desorbed;

(e)   partially repressurizing said
      first adsorber by adding
      enriched product gas to said
      first adsorber;

(f)   cocurrently partially
      repressurizing said first
      adsorber by cocurrently venting
      said second adsorber to said
      first adsorber until the
      pressures of said first and
      second adsorbers are equalized,
      thereby simultaneously partially
      depressurizing said second
      adsorber; and

(g)   repressurizing said first
      adsorber to said adsorption
      pressure using said feed stream
      gas mixture;

and wherein said second of said two adsorbers
repeatedly passes through Steps(a) through (g)
above, treating the second adsorber as the first
adsorber and vice versa, and wherein the operating
sequences for said first adsorber and said second
adsorber align so that Step (a) for said first
adsorber occurs simultaneously with Step (g) for
said second adsorber and Step (a) for said second adsorber occurs simultaneous with Step (g) for said first adsorber.

2. The process of Claim 1, wherein said molecular sieve is a carbon molecular sieve, wherein said feed stream gas mixture is air and wherein said enriched gas is at least 90 percent inert gas, by volume.

3. The process of Claim 2, wherein said adsorption pressure is from 1.0 to 30.0 bars.

4. The process of Claim 3, wherein said adsorption pressure is from 4.0 to 9.0 bars.

5. The process of Claim 2, wherein said enriched gas is at least 95 percent inert gas, by volume.

6. The process of Claim 5, wherein said enriched gas is at least 97 percent inert gas, by volume.

7. The process of Claim 6, wherein said enriched gas is at least 99 percent inert gas, by volume.

8. The process of Claim 1, wherein said molecular sieve is a carbon molecular sieve, and wherein said feed stream gas mixture comprises methane and carbon dioxide; or methane and air; or hydrogen, carbon dioxide and hydrocarbon gases; or hydrogen and hydrocarbon gases.

9. A molecular sieve pressure swing adsorption process employing three or four adsorbers for generating enriched gas from a feed
stream gas mixture, wherein each adsorber
repeatedly passes through sequential steps
comprising:

(a)     cocurrent adsorption, thereby
        producing an enriched product
        gas;

(b)     cocurrent partial
        depressurization by venting to
        another adsorber until the
        pressure of the other adsorber
        is equal to the pressure of the
        adsorber being depressurized;

(c)     countercurrent vent to
        atmosphere, thereby reducing the
        pressure to atmospheric pressure;

(d)     regeneration by purging with
        enriched product gas;

(e)     partial repressurization by
        addition of enriched gas;

(f)     cocurrent partial
        repressurization by venting from
        another adsorber until the
        pressure of the other adsorber
        is equal to the pressure of the
        adsorber being repressurized; and

(g)     repressurization to the
        adsorption pressure using the
        feed stream gas mixture.

0147277

1/2

FIG. 1

# FIG. 2

## Adsorber Operation Sequence

Adsorber A:

```
|————————|——————|————|——————————|————————|—————————|———————————|
 Step 2  Step 3  Step 4   Step 5    Step 6   Step 7      Step 1
```

Adsorber B:

```
|————————|————————————|——————————|————————|————|——————————|—————|
 Step 6     Step 7        Step 1    Step 2  Step 3  Step 4   Step 5
```

The steps shown are repeated in sequence. The steps are not drawn to scale
with respect to time.

Step 1 = High pressure absorption.

Step 2 = Cocurrent pressure equalization, partially depressurizing an adsorber.

Step 3 = Countercurrent depressurization by venting.

Step 4 = Regeneration using countercurrent product gas purge.

Step 5 = Product gas repressurization.

Step 6 = Cocurrent pressure equalization, partially repressurizing adsorber.

Step 7 = Feed gas repressurization.